# EUROPÄISCHE PATENTSCHRIFT

(11) **EP 1 486 284 B1**
(45) Veröffentlichungstag und Bekanntmachung des Hinweises auf die Patenterteilung: **15.10.2008**
(21) Anmeldenummer: 04013848.9
(22) Anmeldetag: 14.06.2004
(51) Int. Cl.: B23K 9/04, B23K 35/00

(54) **Verfahren und Vorrichtung zum Schweissplatieren**
Method and appartus for clad welding
Appareil et méthode de soudage de rechargement

(30) Priorität: 13.06.2003 DE 10326694
(43) Veröffentlichungstag der Anmeldung: 15.12.2004
(73) Patentinhaber: ThyssenKrupp Xervon Energy GmbH, 47138 Duisburg (DE)
(72) Erfinder: Strykowski von, Dietmar, 33803 steinhagen (DE)
(74) Vertreter: Stenger, Watzke & Ring

(56) Entgegenhaltungen:
- WO-A-99/50018
- DE-U- 29 820 756
- US-A- 3 109 920
- US-A- 3 133 184
- US-B1- 6 230 072

## Beschreibung

Die Erfindung betrifft ein Verfahren zum Schweißplattieren nach dem Metall-Aktivgasschweißen (MAG) nach dem Oberbegriff des Anspruchs 1, bei dem ein Schweißbrenner eine Pendelbewegung ausführt und mit Schweißgeschwindigkeit entlang einer vorgegebenen Bahn verfahren wird sowie eine dazugehörige Vorrichtung nach dem Oberbegriff des Anspruchs 7. Ein solches Verfahren und eine solche Vorrichtung sind aus der DE 298 20 756 bekannt.

Kesselrohrwände sind einer hohen korrosiven Belastung ausgesetzt und werden in Abhängigkeit der verwendeten Medien plattiert. Dabei wird der Grundwerkstoff der Rohrwände, der aus einem im allgemeinen schweißbaren Baustahl besteht, mit einem niedriglegierten Nickelchromstahl beschichtet. Die Schichtdicke kann von wenigen Zehntelmillimetern bis hin zu 5 mm betragen.
Dieses Verfahren der Schweißplattierung wird zur Sanierung von bereits benutzten Kesseln eingesetzt, bei denen die Oberfläche aufgrund der Korrosion bereits stark mit Vertiefungen beschädigt ist, sie wird aber auch bei der Erstauslieferung der Kessel verwendet, um eine vorgegebene Lebensdauer der Bauteile zu erreichen.
Die Ausführung der Schweißplattierung erfolgt mit einem Schweißbrenner im Metall-Aktivgasschweißverfahren (MAG), der auf einer Pendeleinrichtung befestigt ist und an einem Zentralbalken abwärts fährt. Bei der Erstauslieferung von plattierten Kesselrohrwänden stehen die Kessel in der Werkstatt mit ihrer Längsachse senkrecht auf dem Boden. Die entstehende Schweißraupe ist eine Fallnaht mit einer Breite von 10 bis 20 mm. Die Schweißraupen werden mit einer Überlappung von ca. 50 % neben bzw. übereinander gelegt. Rohrwand-Ungänzungen werden mittels eines Supportes unterhalb des Pendlers von Hand nachkorrigiert. Um passable Schweißparameter und somit die Qualität der Schweißplattierung zu gewährleisten, stellt der Schweißer den Lichtbogen mittels mechanischem Kurbelantrieb ein. Bei neuen Rohrwänden ist dieses Verfahren noch praktikabel, da die metallischen Oberflächen noch eben sind und die Kesselwände sich noch nicht verzogen haben. Bei einer Kesselsanierung sind die Wände jedoch abgezehrt, vernarbt und sehr ungleichmäßig in ihrer Oberfläche und metallischen Dicke. Die Mulden und Vertiefungen, die bis zu 1,5 mm betragen, müssen bei der Sanierung ausgeglichen werden. Um die kundenseitig geforderte Qualität in Bezug auf die Fe-Aufmischung bzw. Schichtdicke zu erreichen, wird im gleichen Verfahren eine zweite Lage (Decklage) darüber geschweißt. Zur Erhöhung der Schweißleistung wird ein zweiter Brenner parallel auf dem Support befestigt, was für den Schweißer kaum zu kontrollieren ist, da er permanent zwei Brenner zu beobachten und manuell einzustellen hat. Bei einer Sanierung von Kesseln vor Ort ist dies für den Schweißer sehr ermüdend und nicht mehr auf Dauer praktikabel.

Das Schweißplattieren von Kesselrohrwänden bzw. das Schweißplattieren mit Pufferlage sind beispielsweise in der DE 298 20 756 oder US 3,133,184 beschrieben.

In der DE-A-3507012 wird ein Schweißkopfführungssystem zum Lichtbogenschweißen von gekrümmten Nahtfugen, insbesondere Kehlnähen, beschrieben, welches auch zum Tandemschweißen von Kehlnähten geeignet ist. Diese Schrift gibt keine Hinweise auf die Besonderheiten beim Schweißplattieren von großen Flächen und ist ausschließlich auf gekrümmte Kehlnähte ausgerichtet.

Es ist die Aufgabe der vorliegenden Erfindung, ein Verfahren und eine Vorrichtung für die Schweißplattierung von Kesselrohrwänden zu schaffen, bei der regelmäßige und unregelmäßige metallische Oberflächen zuverlässig und kostengünstig plattiert werden.

Diese Aufgabe wird dadurch gelöst, dass in Schweißrichtung einem ersten Schweißbrenner ein zweiter Schweißbrenner in einem vorgegebenen Abstand folgt, wobei der erste Schweißbrenner die Pufferlage einer Schweißraupe erzeugt und der zweite Schweißbrenner die Decklage einer Schweißraupe erzeugt, wobei die Decklage die Pufferlage vollständig überdeckt. Damit ist eine gleichmäßige Plattierung möglich, da die Pufferlage die Unebenheiten und Vertiefungen ausgleicht und die Decklage mit sehr genauer Dickeneinstellung geschweißt werden kann. Es sind nach dem Verfahren sehr dünne und gleichmäßige Plattierungen möglich, was sich vorteilhaft für die Schweißgeschwindigkeit auswirkt. Bei einer Pufferlage von 1 mm Dicke und einer Decklage von 1 mm Dicke sind Schweißgeschwindigkeiten bis 0,8 mm/min möglich. Da gleichzeitig jede Schweißposition nur einmal angefahren wird, und durch die hohe Schweißgeschwindigkeit die eingebrachte Streckenergie reduziert wird, ergibt sich eine geringere Schrumpfung des Werkstoffes und damit die Spannungen im Kessel.

Dadurch, dass der Abstand der Schweißbrenner in Schweißrichtung 80 bis 200 mm beträgt, und der zweite Schweißbrenner auf die noch heiße Pufferlage die Decklage aufbringt, reduziert sich die Fe-Aufmischung im Werkstoff. Dies ergibt eine feinere Kristallisation und damit bessere mechanisch technologische Gütewerte.

Vorteilhafterweise führen die Schweißbrenner eine Pendelbewegung aus, was die Produktivität erhöht.

Mit diesem Verfahren ist es möglich, mit den Schweißbrennern unterschiedliche Schweißwerkstoffe zu verarbeiten. So kann die Pufferschicht beispielsweise aus Inconel 625 bestehen, und die Deckschicht aus Inconel 686.
Eine weitere Produktivitätssteigerung lässt sich dadurch erreichen, dass ein zweites Paar Schweißbrenner parallel zu den bisherigen Schweißbrennern angeordnet sind, so dass parallel zur ersten Schweißraupe in einem Abstand von 200 mm bis 600 mm eine zweite Schweißraupe erzeugt wird. Es ist offensichtlich, dass dieses Verfahren nicht nur zum Schweißplattieren verwendet werden kann, sondern auch zum Panzern und zum Puffern.

Dadurch, dass der erste Brenner, der die Pufferlage erzeugt, automatisch gezündet und abgeschaltet werden kann, verringert sich die Schweißzeit erheblich, da die gesamte Vorrichtung damit automatisch in eine neue Schweißlage verfahren kann. Das mechanische Zünden und Abschalten des zweiten Brenners lässt eine einfache Anpassung an unterschiedliche Brennerabstände zu.

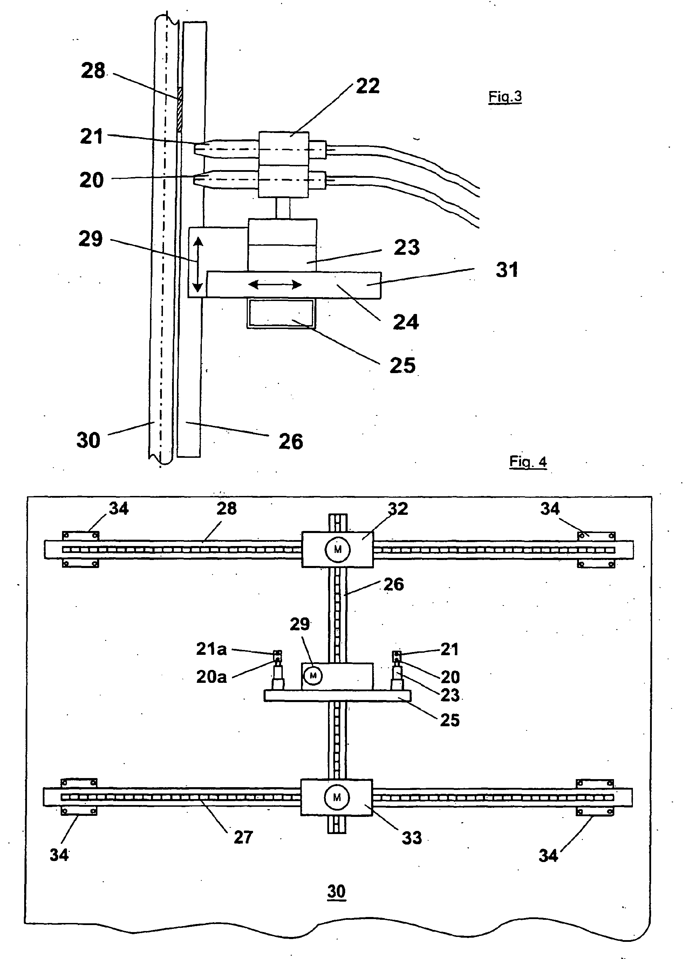

Die Vorrichtung, mit der das zuvor beschriebene Verfahren möglich ist, besteht aus einer Pendeleinrichtung, auf der in Schweißrichtung einem ersten Schweißbrenner ein zweiter Schweißbrenner nachfolgend angeordnet ist, und einer Antriebsvorrichtung, mit der die Schweißbrenner mit Schweißgeschwindigkeit verfahren werden.
Der Abstand zwischen den Schweißbrennern ist durch einen Abstandshalter verstellbar.
Vorteilhafterweise ist der Abstandshalter derart geteilt, dass der Abstand jeder Schweißbrennerdüse zur Werkstückoberfläche separat einstellbar ist.
Die weiteren Details der Vorrichtung sind anhand von Fig. 3 und Fig. 4 beschrieben.

Die Erfindung ist an den folgenden Zeichnungen beispielhaft erläutert. Dabei zeigen
- Fig. 1: eine nach dem Stand der Technik erzeugte Schweißplattierung von Kesselrohrwänden,
- Fig. 2: eine nach der Erfindung erzeugte Schweißplattierung von Kesselrohrwänden
- Fig. 3: eine erfindungsgemäße Doppelbrenneranlage in Seitenansicht
- Fig. 4: eine erfindungsgemäße Doppelbrenneranlage in Doppelausführung in Draufsicht.

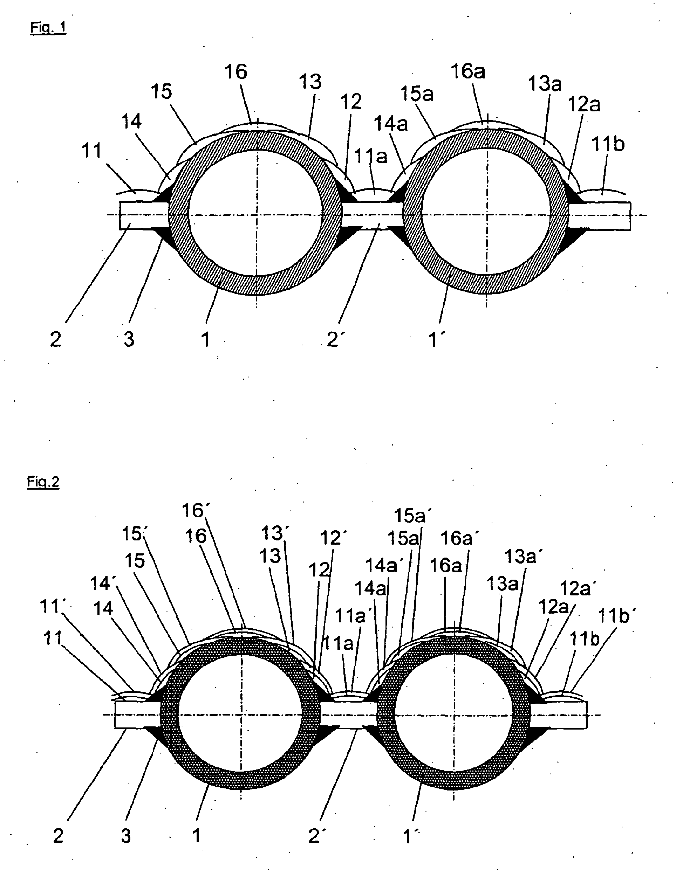

In Fig. 1 ist ein Ausschnitt eines Querschnittes einer Kesselrohrwand dargestellt. Je zwei Rohre (1, 1) sind mit einem Steg (2, 2') durch Schweißnähte (3) verbunden. Auf der Kesselinnenseite sind die Rohre (1, 1'), die Stege (2, 2') und die Schweißnähte (3) durch Schweißraupen (11 - 16, 11a - 16a, 11b) plattiert.
Die Plattierung der Kesselrohrwand wird nach der folgenden Reihenfolge durchgeführt: Zuerst werden die Stege (2, 2') mit Schweißraupen (11, 11a, 11b) plattiert. Die Schweißraupen (11, 11a, 11b) bedecken dabei den gesamten Steg (2, 2') einschließlich eines Teiles der Kehlnähte (3). Die nächste Schweißraupe (12, 12a) überdeckt einen Teil der Schweißraupe (11, 11a, 11b). Die Überdeckung kann bis zu 50 % betragen. Danach folgen die Schweißraupen (13), (14), (15) und (16), wobei auch diese Schweißraupen die vorhergehenden um bis zu 50 % überdecken können. Eine gleichmäßige Plattierung mit einer Lage Schweißraupen ist bei ungleichmäßigen Oberflächen und Vertiefungen nur sehr schwer und manchmal gar nicht möglich, da bei großen Vertiefungen die Überdeckung zur vorherigen Schweißraupe nicht möglich ist und damit die erforderliche Plattierungsdicke nicht eingehalten werden kann.

In Fig. 2 ist ein Ausschnitt eines Querschnittes einer Kesselrohrwand dargestellt, wie sie nach der Erfindung plattiert wird. Im Gegensatz zur Darstellung nach Fig. 1 besteht hier jede Schweißraupe aus einer Pufferlage und aus einer Decklage.
Die Plattierung wird nach folgenden Reihenfolge durchgeführt: Zuerst werden alle Stege (2, 2') mit Schweißraupen plattiert. Dazu wird z.b. auf dem Steg (2) eine Pufferlage (11) geschweißt und anschließend direkt durch einen zweiten Brenner die Decklage (11') nachgezogen. Danach erfolgt die Schweißung der Puffer- und Decklage (12, 12'), (13, 13'), (14, 14'), (15,15') und (16, 16'). Die Überdeckung der Schweißraupen beträgt dabei etwa 5 mm. Eine gleichmäßige Plattierung ist möglich, da die Pufferlagen die ungleichmäßigen Oberflächen und Vertiefungen ausgleichen und die Decklagen dabei die Pufferlagen zu 100 % überdecken. Damit kann jederzeit durch die Decklage die erforderliche Plattierungsdicke eingehalten werden kann. Dieses Verfahren ist nicht nur für Kesselrohrwände geeignet, sondern für alle großen Bauteile, die großflächig plattiert, gepanzert oder gepuffert werden.
Neben der Verwendung für Fallnähte eignet sich das Verfahren auch für Überkopfnähte.

Eine erfindungsgemäße Doppelbrenneranlage in Seitenansicht wird in Fig. 3 dargestellt. Zwei übereinander liegende Brenner (20, 21) sind an einem Abstandshalter (22) befestigt. Der Abstand zwischen dem unteren Brenner (20) und dem oberen Brenner (21) kann zwischen 80 und 200 mm betragen. Der Abstandshalter (22) ist geteilt und über einen feststellbaren Zapfen drehbar ausgeführt. Damit sind unterschiedliche Brennerabstände von der Rohrwand und damit eine Anpassung an z.b. eine gewölbte Kesselwand möglich. Die Brenner (20, 21) mit dem Abstandshalter (22) sitzen auf einem gemeinsamen Pendler (23), der an einem Fahrmast (26) abwärts fährt. Mit dem Pendler (23) kann die Breite der Schweißraupe eingestellt werden, die zwischen 10 und 20 mm liegen kann. Die eingestellte Lichtbogenspannung an der Kesselwand steuert über die Schweißstromquelle den Abstand des Quersupportes (24) und damit den Abstand der Brenner (20, 21) von der Kesseloberfläche. Der Quersupport (24) kann über einen manuellen Taster (31) eingerichtet werden. Ein manuelles Verstellen durch einen Schweißer ist damit nicht mehr nötig. Aus dem halbautomatischen Schweißvorgang wird damit ein vollautomatischer Schweißvorgang.
Bei Beginn des Schweißvorganges wird erst der untere Brenner (20) automatisch gezündet. Da der obere Brenner (21) zwischen 80 und 200 mm in Schweißrichtung dem unteren Brenner (20) nachfolgt, wird der obere Brenner (21) mit einem mechanischen Ein/Ausschalter gezündet, wenn der obere Brenner (21) die Pufferlage der Schweißraupe erreicht hat. Beim Schweißende schaltet der untere Brenner (20) automatisch ab, und der obere Brenner wird bei Erreichen des Schweißendes mit dem mechanischen Ein/Ausschalter abgeschaltet.

In Fig. 4 ist die Gesamtanordnung der Vorrichtung dargestellt. An einer senkrecht stehenden Paneelwand (30) sind vier Befestigungsplatten (34) angebracht. An je zwei Befestigungsplatten (34) ist eine horizontale Fahrschiene (27, 28) angebracht, die parallel zueinander verlaufen. Senkrecht zu den Fahrschienen (27, 28) ist ein Fahrmast (26) angeordnet, der über zwei Antriebe (32, 33) horizontal auf den Fahrschienen (27, 28) verfahren wird. Auf dem Fahrmast (26) ist eine Zahnstange angeordnet, in die ein motorischer Antrieb (29) eingreift, um den Support (25) zu verfahren. In dieser Darstellung sind vier Brenner (20, 21, 20a, 21a), also zwei Doppelbrenner angeordnet, wobei die Doppelbrenner symmetrisch zum Fahrmast angeordnet sind. Damit können zwei Schweißraupen parallel erzeugt werden. Es ist auch die Anordnung von zwei Doppelbrennern unsymmetrisch zum Fahrmast (26) möglich, also einseitig links oder rechts vom Fahrmast (26) auf dem Support (25) angeordnet. Es ist offensichtlich, dass diese Vorrichtung nicht nur bei stehenden Behältern und Kesseln angewendet werden kann, sondern auch bei liegenden oder schrägstehenden Werkstückoberflächen, wobei die Schweißparameter entsprechend eingestellt werden müssen.

## Patentansprüche

1. Verfahren zum Schweißplattieren von Kesselrohrwänden nach dem Metall-Aktivgasschweißen (MAG), bei dem ein Schweißbrenner eine Pendelbewegung ausführt und mit Schweißgeschwindigkeit entlang einer vorgegebenen geraden Bahn verfahren wird, wobei in Schweißrichtung einem ersten Schweißbrenner ein zweiter Schweißbrenner in einem vorgegebenen Abstand folgt, der erste Schweißbrenner die Pufferlage einer Schweißraupe erzeugt und der zweite Schweißbrenner die Decklage einer Schweißraupe erzeugt, wobei die Decklage die Pufferlage vollständig überdeckt, **dadurch gekennzeichnet, daß** mit Beginn des Schweißvorganges der erste Schweißbrenner (20) automatisch gezündet, und der nachfolgende zweite Schweißbrenner (21) beim Erreichen der Pufferlage mechanisch gezündet wird und/oder daß mit Ende des Schweißvorganges der erste Schweißbrenner (20) automatisch abgeschaltet, und der nachfolgende zweite Schweißbrenner (21) beim Erreichen des Schweißendes mechanisch abgeschaltet wird.

2. Verfahren nach Anspruch 1, **dadurch gekennzeichnet, daß** der Abstand der Schweißbrenner (20, 21) in Schweißrichtung 80 bis 200 mm beträgt.

3. Verfahren nach Anspruch 1 oder 2, **dadurch gekennzeichnet, daß** die Schweißbrenner (20, 21) eine Pendelbewegung ausführen.

4. Verfahren nach einem der Ansprüche 1 bis 3, **dadurch gekennzeichnet, daß** mit den Schweißbrennern (20, 21) unterschiedliche Schweißwerkstoffe verarbeitet werden.

5. Verfahren nach einem der Ansprüche 1 bis 4, **dadurch gekennzeichnet, daß** ein zweites Paar Schweißbrenner (20a, 21a) parallel zu den Schweißbrennern (20, 21) angeordnet sind und eine zweite Puffer- und Decklage einer Schweißraupe erzeugen.

6. Verfahren nach einem der Ansprüche 1 bis 5, **dadurch gekennzeichnet, daß** der Abstand der Schweißbrenner zur Oberfläche des Werkstückes durch die eingestellte Lichtbogenspannung gesteuert wird.

7. Vorrichtung zum Schweißplattieren von Kesselrohrwänden nach dem Metall-Aktivgasschweißen (MAG), die einen ersten und einen zweiten Schweißbrenner, eine Pendeleinrichtung und eine Antriebsvorrichtung aufweist, wobei beim Schweißen ein Brenner auf der Pendeleinrichtung befestigt ist und mit der Antriebsvorrichtung in Schweißgeschwindigkeit auf einer vorgegebenen geradlinigen Bahn verfahren wird, wobei in Schweißrichtung dem ersten Schweißbrenner nachfolgend der zweiter Schweißbrenner angeordnet ist, **dadurch gekennzeichnet, dass** der erste Schweißbrenner automatisch zünd- und abschaltbar und zweite schweißbrenner mechanisch zünd- und abschaltbar ist, sodass mit Beginn des Schweißvorganges der erste Schweißbrenner (20) automatisch gezündet, und der nachfolgende zweite Schweißbrenner (21) beim Erreichen der Pufferlage mechanisch gezündet wird und/oder dass mit Ende des Schweißvorganges der erste Schweißbrenner (20) automatisch abgeschaltet, und der nachfolgende zweite Schweißbrenner (21) beim Erreichen des Schweißendes mechanisch abgeschaltet wird.

8. Vorrichtung nach Anspruch 7, **dadurch gekennzeichnet, daß** der Abstand zwischen den Schweißbrennern (20, 21) durch einen Abstandshalter (22) verstellbar ist.

9. Vorrichtung nach Anspruch 8, **dadurch gekennzeichnet, daß** der Abstandshalter (22) derart geteilt ist, daß der Abstand jeder Schweißbrennerdüse zur Werkstückoberfläche separat einstellbar ist.

10. Vorrichtung nach einem oder mehreren der Ansprüche 7 bis 9, **dadurch gekennzeichnet, daß** die Schweißbrenner (20, 21) und der Abstandshalter (22) gemeinsam auf einem Pendler (23) angeordnet sind.

11. Vorrichtung nach einem oder mehreren der Ansprüche 7 bis 10, **dadurch gekennzeichnet, daß** der Abstand der Schweißbrenner (20, 21) von der Werkstückoberfläche über die Stromquellenspannung mittels Motor am Quersupport (24) geregelt wird.

12. Vorrichtung nach einem oder mehreren der Ansprüche 7 bis 11, **dadurch gekennzeichnet, daß** parallel in Schweißrichtung zu den Schweißbrennern (20, 21) zwei weitere Schweißbrenner (20a, 21a) auf dem Support (25) angeordnet sind.

13. Vorrichtung nach einem oder mehreren der Ansprüche 9 bis 12, **dadurch gekennzeichnet, daß** die Schweißbrenner (20, 21), der Pendler (23) und der Quersupport (24) auf einem Support (25) angeordnet sind, der mittels motorischem Antrieb (29) auf einem Fahrmast (26) eine kontinuierliche und geradlinige Bewegung ausführt, die der Schweißgeschwindigkeit entspricht.

14. Vorrichtung nach Anspruch 13, **dadurch gekennzeichnet, daß** der Fahrmast mittels motorischen Antrieben (32, 33) senkrecht zur Schweißrichtung auf zwei Fahrschienen (27, 28) verfahrbar ist.

15. Vorrichtung nach Anspruch 14, **dadurch gekennzeichnet, daß** die Fahrschienen (27, 28) an einer senkrecht stehenden Fläche befestigt sind.

## Claims

1. A method of clad welding boiler tube walls using Metal Active Gas welding (MAG), in which a welding torch performs an oscillating motion and is moved at a welding speed along a predetermined straight path, wherein a second welding torch follows a first welding torch in the welding direction at a predetermined distance, the first welding torch produces the interlayer of a weld bead and the second welding torch produces the cover layer of a wield bead, wherein the cover layer completely covers the interlayer, **characterised in that** at the beginning at the welding process the first welding torch (20) is automatically ignited and the following second welding torch (21) is mechanically ignited on reaching the interlayer and/or that at the end of the welding process the first welding torch (20) is automatically switched off and the following second welding torch (21) is mechanically switched off on reaching the end of the weld.

2. A method is claimed in Claim 1, **characterised in that** the spacing of the welding torches (20,21) in the welding direction is 80 to 200 mm.

3. A method is claimed in Claim 1 or 2, **characterised in that** the welding torches (20,21) perform an oscillating motion.

4. A method is claimed in one of Claims 1 to 3, **characterised in that** different welding materials are processed with the welding torches (20,21).

5. A method is claimed in one of Claims 1 to 4, **characterised in that** a second pair of welding torches (20a,21a) are disposed parallel to the welding torches (20,21) and produce a second interlayer and cover layer.

6. A method is claimed in one of Claims 1 to 5, **characterised in that** the spacing of the welding torches from the surface of the work piece is controlled by the arc voltage which is set.

7. Apparatus for clad welding boiler tube walls using Metal Active Gas welding (MAG), which includes a first and a second welding torch, an oscillating device and a drive device, wherein one torch is secured to the oscillating device during welding and is moved with the drive device at a welding speed on a predetermined, straight path, wherein the second welding torch is arranged to follow the first welding torch in the welding direction, **characterised in that** the first welding torch may be ignited and switched-off automatically and the second welding torch may be ignited and switched-off mechanically so that at the beginning of the welding process the first welding torch (20) ignites automatically and the following second welding torch (21) is ignited mechanically on reaching the interlayer and/or at the end of the welding process the first welding torch (20) is automatically switched-off and the following second welding torch (21) is switched-off mechanically on reaching the end of the weld.

8. Apparatus as claimed in Claim 7, **characterised in that** the spacing between the welding torches (20) is adjustable by means of a spacer (22).

9. Apparatus as claimed in Claim 8, **characterised in that** the spacer (22) is divided so that the spacing of each welding torch nozzle from the surface of the workpiece is separately adjustable.

10. Apparatus as claimed in Claim 1 or more of Claims 7 to 9, **characterised in that** the welding torches (20,21) and the spacer (22) are arranged together on an oscillator (23).

11. Apparatus as claimed in Claim 1 or more of Claims 7 to 10, **characterised in that** the spacing of the welding torches (20,21) from the surface of the workpiece is controlled by the current source voltage by means of a motor on the transverse support (24).

12. Apparatus as claimed in Claim 1 or more of Claims 7 to 11, **characterised in that** two further welding torches (20a,21a) are arranged on the support (25) parallel to the welding torches (20,21) in the welding direction.

13. Apparatus as claimed in Claim 1 or more of Claims 9 to 12, **characterised in that** the welding torches (20,21), the oscillator (23) and the transverse support (24) are arranged on a support (25), which performs a continuous and straight line movement, which corresponds to the welding speed, by means of a motor drive (29) on a movable mast (26).

14. Apparatus claimed in Claim 13, **characterised in that** the movable mast is movable by means of motor drives (32,33) perpendicular to the welding direction on two tracks (27,28).

15. Apparatus claimed in Claim 14, **characterised in that** the tracks, (27,28) are secured to a horizontal surface.

## Revendications

1. Procédé pour le plaquage par soudage de parois de tubes de chaudières selon le procédé de soudage avec électrode métallique sous gaz actif (MAG), dans lequel une torche de soudage réalise un mouvement oscillant et est déplacée à la vitesse de soudage le long d'une trajectoire rectiligne prédéterminée, dans lequel une première torche de soudage est suivie par une deuxième torche de soudage à une distance prédéterminée dans le sens de soudage, la première torche de soudage crée la couche de tampon d'un bourrelet de soudure et la deuxième torche de soudage crée la couche de couverture d'un bourrelet de soudure, la couche de couverture recouvrant complètement la couche de tampon, **caractérisé en ce que** la première torche de soudage (20) est allumée automatiquement au début de l'opération de soudage, et la deuxième torche de soudage (21) qui suit est allumée mécaniquement quand la zone de tampon est atteinte et/ou **en ce que** la première torche de soudage (20) est éteinte automatiquement à la fin de l'opération de soudage et la deuxième torche de soudage ( 21) qui suit est éteinte mécaniquement quand l'extrémité de la soudure est atteinte.

2. Procédé selon la revendication 1, **caractérisé en ce que** la distance entre les torches de soudage (20, 21) dans le sens du soudage est de 80 à 200 mm.

3. Procédé selon la revendication 1 ou 2, **caractérisé en ce que** les torches de soudage (20, 21) effectuent un mouvement oscillant.

4. Procédé selon l'une des revendications 1 à 3, **caractérisé en ce que** des matériaux de soudage différents sont mis en oeuvre avec les torches de soudage (20, 21).

5. Procédé selon l'une des revendications 1 à 4, **caractérisé en ce qu'**une deuxième paire de torches de soudage (20a, 21a) est disposée parallèlement aux torches de soudage (20, 21) et créent une deuxième couche de tampon et de couverture d'un bourrelet de soudure.

6. Procédé selon l'une des revendications 1 à 5, **caractérisé en ce que** la distance entre les torches de soudage et la surface de la pièce est régulée par la tension d'arc électrique réglée.

7. Dispositif pour le plaquage par soudage de parois de tubes de chaudières selon le procédé de soudage avec électrode métallique sous gaz actif (MAG), comprenant une première torche de soudage et une seconde, un dispositif oscillant et un dispositif d'entraînement, dans lequel une torche est fixée sur le dispositif oscillant lors du soudage et déplacée par le dispositif d'entraînement dans le sens du soudage sur une trajectoire rectiligne prédéterminée, la deuxième torche de soudage étant disposée à la suite de la première torche de soudage dans le sens du soudage, **caractérisé en ce que** la première torche de soudage peut être allumée et éteinte automatiquement et la deuxième torche de soudage peut être allumée et éteinte mécaniquement, de sorte que la première torche de soudage (20) est allumée automatiquement au début de l'opération de soudage et la deuxième torche de soudage (21) qui suit est allumée mécaniquement quand la zone de tampon est atteinte et/ou que la première torche de soudage (20) est éteinte automatiquement à la fin de l'opération de soudage et la deuxième torche de soudage ( 21) qui suit est éteinte mécaniquement quand l'extrémité de la soudure est atteinte.

8. Dispositif selon la revendication 7, **caractérisé en ce que** la distance entre les torches de soudage (20, 21) est réglable à l'aide d'un élément d'écartement (22).

9. Dispositif selon la revendication 8, **caractérisé en ce que** l'élément d'écartement (22) est divisé de telle sorte que la distance entre chaque buse de torche de soudage et la surface de la pièce peut être réglée séparément.

10. Dispositif selon une ou plusieurs des revendications 7 à 9, **caractérisé en ce que** les torches de soudage (20, 21) et l'élément d'écartement (22) sont disposés ensemble sur un élément oscillant (23).

11. Dispositif selon une à plusieurs des revendications 7 à 10, **caractérisé en ce que** la distance entre les torches de soudage (20, 21) et la surface de la pièce est régulée à l'aide de la tension de la source de courant au moyen d'un moteur sur le support transversal (24).

12. Dispositif selon une à plusieurs des revendications 7 à 11, **caractérisé en ce qu'**il est prévu parallèlement au sens de soudage des torches de soudage (20, 21) deux autres torches de soudage (20a, 21a) sur le support (25).

13. Dispositif selon une à plusieurs des revendications 9 à 12, **caractérisé en ce que** les torches de soudage (20, 21), l'élément oscillant (23) et le support transversal (24) sont disposés sur un support (25) qui exécute sur un mât de déplacement (26), à l'aide d'un entraînement à moteur, un déplacement continu en ligne droite correspondant à la vitesse de soudage.

14. Dispositif selon la revendication 13, **caractérisé en ce que** le mât de déplacement peut être déplacé perpendiculairement au sens de soudage sur deux rails de déplacement (27, 28) au moyen d'entraînements à moteur (32, 33).

15. Dispositif selon la revendication 14, **caractérisé en ce que** les rails de déplacement (27, 28) sont fixés sur une surface dressée verticalement.
